# EUROPÄISCHE PATENTSCHRIFT

(11) **EP 2 839 981 B1**
(45) Veröffentlichungstag und Bekanntmachung des Hinweises auf die Patenterteilung: **04.09.2019**
(21) Anmeldenummer: 14177058.6
(22) Anmeldetag: 15.07.2014
(51) Int. Cl.: B60J 7/057

(54) **Verfahren zum Schließen eines Verdecks**
Method for closing a cover
Procédé de fermeture d'une capote

(30) Priorität: 23.08.2013 DE 102013216876
(43) Veröffentlichungstag der Anmeldung: 25.02.2015
(73) Patentinhaber: Magna Car Top Systems GmbH, 74321 Bietigheim-Bissingen (DE)
(72) Erfinder: Helwich, Dirk, 71665 Vaihingen/Enz (DE); Stahmer, Michael, 81247 München (DE); Klein, Berthold, 74343 Sachsenheim (DE)
(74) Vertreter: Rausch, Gabriele

(56) Entgegenhaltungen:
- EP-A1- 1 354 740
- DE-A1- 10 232 413
- DE-A1-102008 034 606
- DE-A1-102010 046 617
- US-A1- 2006 178 795

## Beschreibung

Die Erfindung geht aus von einem Verfahren zum Schließen eines Verdecks an einem Cabriolet Fahrzeug, wobei das Verdeck elektrisch oder hydraulisch geöffnet und verschlossen wird und das Fahrzeug eine Innenraumüberwachung und eine Umgebungsüberwachung aufweist.

Weiterhin geht die Erfindung aus von einer Software auf einem mobilen Gerät zur Durchführung des Verfahrens.

### Stand der Technik

Verdecke werden im Stand der Technik besonders in hochwertigen Fahrzeugen elektrisch oder hydraulisch betätigt und verschlossen und geöffnet. Der Öffnungs- und Schließ-Prozess wird dabei von einem Schalter im Inneren des Fahrzeuges gesteuert.

Es besteht allerdings ein gewisses Bedürfnis, das Schließen oder das Öffnen des Verdecks über eine Fernsteuerung zu steuern, damit der Fahrer auch von einem weit entfernten Ort ein Verdeck schließen kann, wenn beispielsweise Regen einsetzt.

Dazu gibt es im Stand der Technik Bausätze, siehe z.B. US 2006/178795 A1 oder DE 102 32 413 A1, die es dem Fahrer erlauben, beispielsweise über den Funkschlüssel oder über eine tragbare Fernbedienung, die mit Bluetooth Schnittstelle an das Fahrzeug angeschlossen ist, das Verdeck zu öffnen und zu schließen.

Sowohl die Bedienung über einen Funkschlüssel als auch über eine Bluetooth Schnittstelle erfolgen in Sichtweite des Fahrzeugs und der Fahrer kann direkt beobachten, ob sich durch das Bewegen des Verdecks eine Gefahr für Dritte ergibt.

Es besteht ein Bedarf, ein Verdeck auch aus einer weiter entfernten Position heraus zu verschließen, wobei hier immer die Gefahr besteht, dass sich Personen oder Gegenstände im Verdeck verklemmen.

Einen automatischen Einklemmschutz für ein Cabrio bereitzustellen ist ein großes Problem. Durch die Vielzahl der möglichen Parameter ist eine automatische Überwachung über Sensoren seien es optische oder Bewegungssensoren, nahezu unmöglich.

Es ist daher Aufgabe der Erfindung, ein Verfahren zur Verfügung zu stellen, mit dem ein Öffnen und Schließen eines Verdecks auch aus einer weit entfernten Position ermöglicht wird, wobei der Benutzer des Verfahrens als letztendliche Instanz die Verantwortung für den Öffnungs- und Schließ-Prozess übernimmt. Es ist somit Aufgabe der Erfindung dem Benutzer eine Information und Entscheidungsgrundlage zu bieten, auf der er entscheiden kann.

Gelöst wird die Aufgabe mit dem Verfahren zum Schließen eines Verdecks an einem Cabrioletfahrzeug gemäss dem Anspruch 1, wobei das Verdeck elektrisch oder hydraulisch geöffnet und verschlossen wird und das Fahrzeug eine Innenraumüberwachung und eine Umgebungsüberwachung aufweist wobei die Daten der Innenraumüberwachung und der Umgebungsüberwachung über eine Luftschnittstelle an ein mobiles Steuergerät übertragen werden und das Öffnen und Schließen des Verdecks über die Luftschnittstelle schaltbar ist.

Durch die Benutzung der Daten der Innenraumüberwachung und der Umgebungsüberwachung ist es auf einfache Art und Weise möglich, ein Bild des Fahrzeugs und der Gegebenheiten im Inneren des Fahrzeugs an den Benutzer zu übermitteln, um ihm so eine Entscheidungsgrundlage zu bieten.

Es ist weiterhin von Vorteil, dass die Luftschnittstelle des Fahrzeugs vom mobilen Steuergerät kontaktiert wird und die Daten der Innenraumüberwachung und der Umgebungsüberwachung nach einer Identifizierung des mobilen Steuergerätes zur Verfügung gestellt werden. Dadurch ist gewährleistet, dass nur der Benutzer die Daten des Fahrzeuges sehen kann und durch die Identifizierung das Fahrzeug nur vom Benutzer angesprochen werden kann.

Vorteilhafterweise ist die Luftschnittstelle eine Standardschnittstelle aus der Gruppe Bluetooth, Mobilfunk, WiMax, WLAN. Besonders vorteilhaft erweist sich dabei die Schnittstellen für Mobilfunk, da moderne Mobilfunkgeräte als mobile Steuereinheiten zur Verfügung stehen. Vorteilhafterweise hat dadurch der Benutzer seine Fernbedienung sowieso dabei.

Eine vorteilhafte Überwachung des Innenraums sowie der Umgebung erfolgt über Kamerasensoren. Die Umgebungsüberwachung resultiert in einem Bird-View Bild, das in modernen Fahrzeugen zur Verfügung steht.

Durch die Verwendung von Mobilfunkgeräten ist es möglich, eine Software zu installieren, die das Kontaktieren der Steuerung des Fahrzeugs ermöglicht und eine Identifikation des Nutzers vorsieht.

### Beschreibung der Erfindung

Die Erfindung wird nachfolgend beispielhaft unter Bezugnahme auf die beigefügte Zeichnung beschrieben.
- Fig. 1: zeigt schematisch die verwendeten Bauteile
- Fig. 2: zeigt eine schematische Darstellung der beispielhaften Ausführungsform.

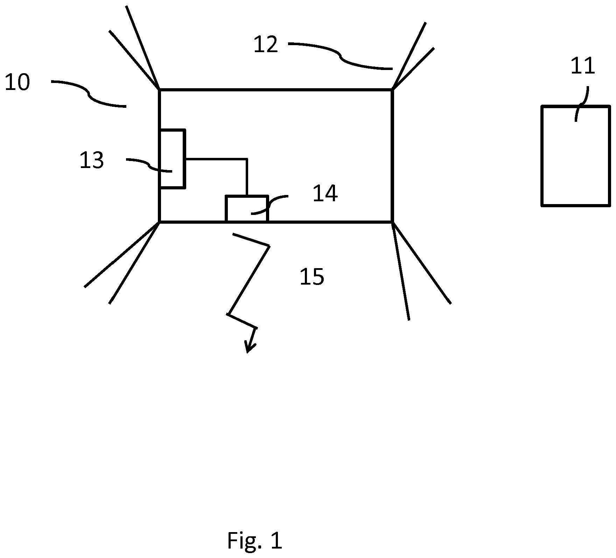

Figur 1 zeigt schematisch die Bauteile, die für die Durchführung des Verfahrens notwendig sind. Ein Fahrzeug 10 ist schematisch dargestellt, wobei die einzelnen Überwachungsbereiche 12 im Außenbereich des Fahrzeugs angedeutet sind. Diese Überwachungsbereiche sind im allgemeinen überlappend angeordnet, damit die fahrzeuginterne Software aus den Bildern der Kameras ein Überblickbild generieren und einen so genannten Bird-View erzeugen kann. Im Inneren des Fahrzeuges befindet sich ebenfalls eine Überwachungseinheit 13. Diese Überwachungseinheit 13 ist eine Kamera, die den gesamten Innenraum überblickt. Eine besonders günstige Position ist dabei eine Kamera im Innenspiegel des Fahrzeugs. Allerdings ist auch eine Innenraumüberwachung über Kamerasensoren, die sich an anderen Positionen befinden denkbar. Die Überwachungseinheit 13 ist mit einer Steuerung 14 verbunden, die die Bilder der Überwachungseinheit an weitere Instanzen des Fahrzeugs weitergeben kann. Die Steuerung 14 ist mit der Fahrzeugsteuerung verbunden oder ist Teil der kompletten Fahrzeugsteuerung. Die Steuerung 14 weist eine Luftschnittstelle 15 auf, die einen Außenkontakt der Steuerung 14 ermöglicht. Die Daten der Überwachung der Außenbereiche 12 werden ebenfalls zur Steuerung 14 gesendet. Über die Luftschnittstelle 15 ist das Fahrzeug mit einem mobilen Gerät 11 ansprechbar.

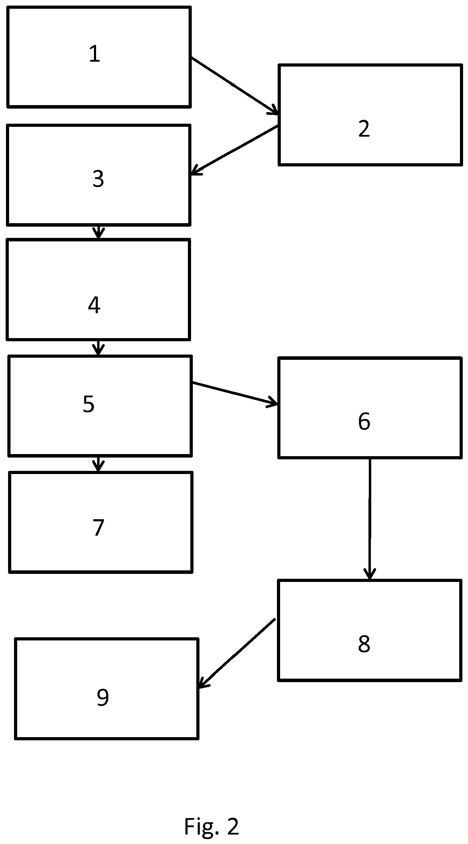

Das mobile Gerät ist dabei ein Smartphone, das heißt ein Mobilfunk-Gerät mit einer Funktionalität, die das Abarbeiten von Softwarepaketen in Form von Apps erlaubt und das Darstellen von Bildern auf einem Display. Figur 2 zeigt den Ablauf des erfindungsgemäßen Verfahrens. Auf der linken Seite sind die Prozessschritte des mobilen Gerätes angegeben auf der rechten Seite die Prozessschritte, die im Fahrzeug stattfinden.

Im Schritt 1 ruft der Benutzer Software im mobilen Gerät auf und lädt sie in einen aktiven Zustand. Das wird mithilfe einer sogenannten App, einer kleinen Software Applikation, beispielsweise auf einem Smartphone erreicht. Die geladene Software verlangt an dieser Stelle eine Identifikation des Benutzers. Nachdem der Benutzer sich gegenüber der Software identifiziert hat, stellt das Gerät die Verbindung zur Luftschnittstelle des Fahrzeugs her.

Es ist allerdings auch möglich, das sich Smartphone direkt mit dem Steuergerät des Fahrzeugs nach Aufruf der Software verbindet, da die Geräte "gepaart" sind und das als Identifikation ausreicht.

Im Schritt 2 wird über die Luftschnittstelle des Fahrzeugs das Signal des mobilen Gerätes empfangen und die Steuereinheit 14 aktiviert sich. Mit der Aktivierung der Steuereinheit werden die Kamerasysteme des Fahrzeuges ebenfalls eingeschaltet und deren Bilder in der Steuereinheit bereitgestellt. Nach dem Einschalten und dem Identifikationsprozess werden die Bilder über die Luftschnittstelle direkt an das mobile Gerät übertragen. Dadurch erhält das Mobilfunkgerät einen aktuelle Darstellung der Situation im und um das Fahrzeug herum.

In Schritt 3 stellt das mobile Gerät die Bilder des Fahrzeugs auf dem Bildschirm dar.

Die Software des mobilen Gerätes wechselt dabei die Darstellung von der Innenraumüberwachung in das Übersichtsbild und zurück. Diese Darstellung der Fahrzeugsituation als aktuelle Übertragung wird eine gewisse Zeit lang im Schritt 4 aufrechterhalten. Beispielsweise wird der Durchlauf der Bilder 30 bis 60 Sekunden aufrechterhalten. Parallel dazu wird eine Information eingespielt, die den Benutzer anzeigt, dass er den Prozess jeder Zeit abbrechen kann.

Nach Ablauf dieser voreingestellten Zeit löst die Software des Mobilfunkgerätes im Schritt 5 einen Befehl aus, mit dem das Verdeck aus dem jeweils vorhandenen Zustand in den anderen Zustand gebracht wird. Das Steuergerät 14 Fahrzeugs empfängt über die Luftschnittstelle 15 im Schritt 6 das Steuersignal des mobilen Gerätes und betätigt den Motor des Verdecks.

Parallel zur automatischen Auslösung des Schließen oder Öffnens des Verdecks stellt die Software des mobilen Gerätes in Schritt 7 einen Schalter zur Verfügung, mit dem der Benutzer den Vorgang jederzeit unterbrechen kann, wenn das aktuelle Bild, das das mobile Gerät darstellt, eine Person oder einen Gegenstand in gefährlicher Nähe erkennen kann. Der dargestellte Softwareschalter stellt ein Not-Aus dar.

Oder der Betätigungsschalter am Mobilfunkgerät muss dauerhaft gedrückt werden damit die Operation durchgeführt wird. Eine Unterbrechung der Verbindung führt dabei zum Anhalten des Daches.

Im Schritt 8 meldet das Steuergerät 14, dass der Prozess des Öffnen oder des Schließen des Verdecks abgeschlossen ist.

Die Software des mobilen Gerätes beendet dann im Schritt 9 den Vorgang und meldet sich vom Fahrzeug ab, wobei die Steuereinheit des Fahrzeugs 14 wieder in einen Ruhezustand gebracht wird.

Alternativ zu der automatischen Öffnung durch die Software des mobilen Gerätes ist es auch möglich, dass der Befehl zum Öffnen und/oder Schließen des Verdeckes vom Benutzer selbst initiiert wird. Dazu drückt der Benutzer in der Wartephase des Schrittes 4 direkt auf einen ebenfalls bereit gestellten Auslöser.

## Patentansprüche

1. Verfahren zum Schließen eines Verdeckes an einem Cabriolet Fahrzeug (10), wobei das Verdeck elektrisch oder hydraulisch geöffnet und verschlossen wird und das Fahrzeug eine Innenraumüberwachung und eine Umgebungsüberwachung aufweist, wobei Bilddaten der Innenraumüberwachung und der Umgebungsüberwachung über eine Luftschnittstelle (15) an ein mobiles Gerät (11) übertragen werden, wobei das Öffnen und/oder Schließen des Verdecks über die Luftschnittstelle (15) schaltbar ist, und wobei das mobile Gerät (11) ein Mobilfunkgerät mit Display ist, **dadurch gekennzeichnet, dass** die Bilddaten der aktuellen Fahrzeugsituation auf dem Display dargestellt werden und nach Ablauf einer voreingestellten Zeit ein Steuersignal des mobilen Gerätes (11) die Betätigung des Verdecks bewirkt, und dass das mobile Gerät (11) eine Abbruchmöglichkeit zur Verfügung stellt, mit der der Benutzer die Betätigung des Verdecks jederzeit unterbrechen kann.

2. Verfahren nach Anspruch 1 **dadurch gekennzeichnet, dass** die Luftschnittstelle (15) des Cabriolet Fahrzeugs vom mobilen Gerät (11) kontaktiert wird und dass die Daten der Innenraumüberwachung und der Umgebungsüberwachung nach einer Identifizierung des mobilen Steuergerätes zur Verfügung gestellt werden.

3. Verfahren nach Anspruch 1 **dadurch gekennzeichnet, dass** die Luftschnittstelle (15) eine Standardschnittstelle aus der Gruppe Bluetooth, Mobilfunk, WIMax, Wlan ist.

4. Verfahren nach Anspruch 1 **dadurch gekennzeichnet, dass** die Innenraumüberwachung aus einer Kameraüberwachung besteht.

5. Verfahren nach Anspruch 1 **dadurch gekennzeichnet, dass** die Umgebungsüberwachung aus Kamerasensoren besteht, die ein Bird-View Bild erzeugen.

6. Verfahren nach Anspruch 1 **dadurch gekennzeichnet, dass** das Mobilfunkgerät mit einer Software zum Kontaktieren der Steuerung des Fahrzeugs und zur Identifikation des Nutzers gegenüber dem Fahrzeug (10) versehen ist.

7. Softwarepaket auf einem mobilen Gerät (11) zur Durchführung des Verfahrens nach einem der Ansprüche 1 bis 6.

## Claims

1. Method for closing a convertible soft top on a cabriolet vehicle (10), wherein the convertible soft top is opened and closed in an electric or hydraulic manner and the vehicle comprises an interior space monitoring system and a surroundings monitoring system, wherein image data of the interior space monitoring system and the surroundings monitoring system is transmitted by way of an air interface (15) to a mobile device (11), wherein the process of opening and/or closing the convertible soft top can be switched by way of the air interface (15), and wherein the mobile device (11), is a mobile network device having a display **characterized in that** the image data of the current vehicle situation are displayed on the display and a control signal of the mobile device (11) effects the actuation of the convertible soft top after a preset time period has elapsed, and **in that** the mobile device (11) provides a cancel option by means of which the user can cancel the actuation of the convertible soft top at any time.

2. Method according to Claim 1 **characterized in that** the air interface (15) of the cabriolet vehicle is contacted by the mobile device (11) and that the data of the interior space monitoring system and the surroundings monitoring system is provided after a process of identifying the mobile control device.

3. Method according to Claim 1 **characterized in that** the air interface (15) is a standard interface from the group Bluetooth, mobile network, WiMAX, WLAN.

4. Method according to Claim 1 **characterized in that** the interior space monitoring system comprises a camera monitoring system.

5. Method according to Claim 1 **characterized in that** the surroundings monitoring system comprises camera sensors that generate a birdview image.

6. Method according to Claim 1 **characterized in that** the mobile network device is provided with software for the purpose of contacting the control device of the vehicle and for the purpose of identifying the user to the vehicle (10).

7. Software package on a mobile device (11) for the purpose of implementing the method according to any one of Claims 1 to 6.

## Revendications

1. Procédé de fermeture d'une capote sur un véhicule cabriolet (10), la capote étant ouverte et fermée électriquement ou hydrauliquement et le véhicule possédant une surveillance de l'habitacle et une surveillance de l'environnement, des données d'image de la surveillance de l'habitacle et de la surveillance de l'environnement étant transmises à un appareil mobile (11) par le biais d'une interface radio (15), l'ouverture et/ou la fermeture de la capote pouvant être commutée par le biais de l'interface radio (15), et l'appareil mobile (11) étant un appareil de radiocommunication mobile comprenant un afficheur, **caractérisé en ce que** les données d'image de la situation actuelle du véhicule sont représentées sur l'afficheur et, après écoulement d'une durée préréglée, un signal de commande de l'appareil mobile (11) produit l'actionnement de la capote, et **en ce que** l'appareil mobile (11) met à disposition une possibilité d'interruption avec laquelle l'utilisateur peut interrompre à tout moment l'actionnement de la capote.

2. Procédé selon la revendication 1, **caractérisé en ce que** l'interface radio (15) du véhicule cabriolet est contactée par l'appareil mobile (11) et **en ce que** les données de la surveillance de l'habitacle et de la surveillance de l'environnement sont mises à disposition après une identification du contrôleur mobile.

3. Procédé selon la revendication 1, **caractérisé en ce que** l'interface radio (15) est une interface standard du groupe Bluetooth, Radiocommunication mobile, WIMax, WLAN.

4. Procédé selon la revendication 1, **caractérisé en ce que** la surveillance de l'habitacle est une surveillance par caméra.

5. Procédé selon la revendication 1, **caractérisé en ce que** la surveillance de l'environnement se compose de capteurs à caméra qui génèrent une image en vue de haut.

6. Procédé selon la revendication 1, **caractérisé en ce que** l'appareil de radiocommunication mobile est doté d'un logiciel servant à contacter la commande du véhicule et à l'identification de l'utilisateur par rapport au véhicule (10).

7. Progiciel sur un appareil mobile (11) destiné à mettre en oeuvre le procédé selon l'une des revendications 1 à 6.
